# EUROPÄISCHE PATENTSCHRIFT

(11) **EP 3 882 911 B1**
(45) Veröffentlichungstag und Bekanntmachung des Hinweises auf die Patenterteilung: **08.01.2025**
(21) Anmeldenummer: 21159976.6
(22) Anmeldetag: 01.03.2021
(51) Int. Cl.: G10L 15/24, G08G 5/00, G06F 40/30, G10L 15/22, G10L 15/183, G10L 15/32, G10L 15/26, G10L 15/193

(54) **VERFAHREN, VORRICHTUNG SOWIE COMPUTERPROGRAMM ZUR SPRACHERKENNUNG**
METHOD, DEVICE AND COMPUTER PROGRAM FOR SPEECH RECOGNITION
PROCÉDÉ, DISPOSITIF, AINSI QUE PROGRAMME INFORMATIQUE DESTINÉS À LA RECONNAISSANCE VOCALE

(30) Priorität: 19.03.2020 DE 102020107619
(43) Veröffentlichungstag der Anmeldung: 22.09.2021
(73) Patentinhaber: Deutsches Zentrum für Luft- und Raumfahrt e.V., 53227 Bonn-Oberkassel (DE)
(72) Erfinder: RATAJ, Jürgen, 38536 Meinersen (DE)
(74) Vertreter: Gramm, Lins & Partner Patent- und Rechtsanwälte PartGmbB

(56) Entgegenhaltungen:
- DE-A1- 102011 107 934
- US-A1- 2010 235 167

## Beschreibung

Die Erfindung betrifft ein Verfahren zur Spracherkennung von Sprachanweisungen eines Operateurs, der eine ihm zugeordnete zu assistierende Situation mittels Sprachanweisungen unterstützt und/oder lenkt, mittels einer Spracherkennungseinrichtung. Die Erfindung betrifft ebenso eine solche Spracherkennungseinrichtung sowie ein Computerprogramm hierzu.

Zur Sicherung und Kontrolle von Verkehrsräumen, insbesondere eines Luftraumes beispielsweise in der Umgebung eines Flughafens oder eines Seeraumes beispielsweise in der Umgebung eines Hafens, existieren in der Regel Verkehrsleitzentralen (umgangssprachlich oft auch als Center bzw. Tower oder warte bezeichnet), die den jeweiligen Verkehr in ihrem Einflussgebiet kontrollieren und auch steuern sollen. Hierfür werden in der Regel Sprachanweisungen an die Fahrzeugbesatzung bzw. den Fahrzeugführer von der Verkehrsleitzentrale übermittelt, die Handlungsanweisungen enthalten, an denen sich die jeweilige Besatzung oder der Fahrzeugführer halten müssen. Hierbei spielt der Faktor Mensch eine große Rolle, da auch heute noch ein Großteil der Verkehrsführungsaufgaben durch einen Operateur (umgangssprachlich oft auch Lotse genannt) erfolgen.

Ein solcher Lotse regelt dabei den Verkehr innerhalb des ihm anvertrauten Einsatzgebietes des Verkehrsraumes, wobei in der Regel eine direkte Verkehrsführung erfolgt. Durch direkte Anweisungen an ein betreffendes Fahrzeug, die meist nur das jeweilige Fahrzeug selber betreffen und dafür gedacht sind, werden Handlungen der Fahrzeugführer des betreffenden Fahrzeuges aufgrund der direkten Anweisungen des Lotsen initiiert, sodass hierüber der gesamte Verkehr innerhalb des Einsatzgebietes bzw. Verkehrsraumes geregelt und gesteuert werden kann. Ein Lotse bzw.

Operateur hat dabei in der Regel ein deutlich höheres Situationsbewusstsein bezüglich der gesamten Verkehrssituation in dem Verkehrsraum als die einzelnen Fahrzeugführer und deren Fahrzeuge selbst.

Handelt es sich bei dem Verkehrsraum als eine zu assistierende Situation beispielsweise um einen Luftraum, beispielsweise in der Umgebung eines Flughafens, so ist der Operateur ein Fluglotse, der für den Flugverkehr innerhalb des ihm anvertrauten Einsatzgebietes verantwortlich ist und dafür Sorge zu tragen hat, dass die Flugzeuge sicher und gegebenenfalls auch ökonomisch durch den ihm anvertrauten Einzugsbereich geführt werden. Hierbei spielen insbesondere das Landen auf einem Flughafen sowie das Starten von einem Flughafen und die sich daraus anschließende Führung der Flugzeuge durch den Luftraum eine besondere Rolle.

Aus der DE 10 2011 107 934 A1 ist ein Assistenzsystem zur Unterstützung eines Fluglotsen bekannt, bei dem mithilfe einer Spracherkennungseinheit die Sprachanweisungen des Lotsen an die Flugzeuge erkannt werden. Die in den erkannten Sprachanweisungen enthaltenen Handlungsanweisungen werden dann zur Anpassung des aktuellen Zustandes der zu assistierenden Situation verwendet, sodass eine deutlich schnellere Anpassung des Zustandes der zu assistierenden Situation erreicht werden kann. Es muss hierbei nicht mehr darauf gewartet werden, dass die sich aus den Sprachanweisungen ergebenden Handlungen tatsächlich auch durch die Sensoren der Zustandserfassung erkennbar werden. Dies führt zu einer größeren Akzeptanz des Gesamtsystems.

In allen Regelungsprozessen, bei denen ein Operateur akustische Sprachanweisungen unter Verwendung einer natürlichen Sprache zur Unterstützung, Führung und/oder Lenkung von Prozessen (beispielsweise Verkehre) verwendet, ist es vorteilhaft, wenn die von dem Operateur gesprochenen Sprachanweisungen automatisch und elektronisch erkannt werden, um so beispielsweise Prozessleitsysteme effizienter zu gestalten und das maschinelle Situationsbewusstsein zu erhöhen. Außerdem können die elektronisch erkannten Sprachanweisungen zu Dokumentationszwecken in textuelle, transkodierter Form abgespeichert werden.

Die Qualität der Sprachverarbeitung hängt dabei sehr stark von der Möglichkeit ab, den möglichen Sprachraum einzuschränken, eine begründete Auswahl zwischen mehreren möglichen Sprachausgaben zu treffen und fehlerhaft erkannte Anweisungen sinnvoll zu ergänzen oder zu verändern. Darüber hinaus ist es für die Transformation von Transkription zur Annotation wesentlich zu wissen, was zutreffende Annotationen für spezifische Situationen sind.

In der DE 10 2011 107 934 A1) wird offenbart, durch das lautlose Mithören von Sprachanweisungen den Zustand der zu assistierenden Situation frühzeitig anzupassen, ohne auf entsprechende Sensordaten warten zu müssen. Dabei werden die vom Operateur gesprochenen Anweisungen an das Flugzeug als Eingabe in das Lotsenunterstützungssystem gewertet, sodass das Lotsenunterstützungssystem bereits Kenntnis von einer zukünftigen bzw. angepassten Luftraumsituation hat, bevor diese Situation tatsächlich auf dem Radar erkennbar wird.

Die US 2010/0235167 A1 offenbart ein Spracherkennungssystem mit einem maschinellen Lernsystem.

Es ist daher Aufgabe der vorliegenden Erfindung ein verbessertes Verfahren sowie eine verbesserte Vorrichtung anzugeben, mit denen die Erkennungsrate bei der Spracherkennung verbessert und die Fehlerrate verringert werden kann, ohne jedoch die Komplexität des Sprachraums im Vorhinein beschränken zu müssen.

Die Aufgabe wird mit dem Verfahren zur Spracherkennung gemäß Anspruch 1 erfindungsgemäß gelöst. Vorteilhafte Ausgestaltungen der Erfindung finden sich in den entsprechenden Unteransprüchen.

Gemäß Anspruch 1 wird ein Verfahren zur Spracherkennung von Sprachanweisungen eines Operateurs beansprucht, wobei der Operateur eine ihm zugeordnete, zu assistierende Situation mittels Sprachanweisungen unterstützen, lenken und/oder führen soll. Eine solche zu assistierende Situation ist insbesondere dergestalt, dass mittels Sprachanweisungen, die gesprochene Anweisungen in natürlicher Sprache enthalten, Einfluss auf den Zustand der zu assistierenden Situation genommen werden soll. Mittels der durch den Operateur ausgesprochenen Sprachanweisungen soll dabei insbesondere der Zustand der zu assistierenden Situation verändert bzw. manipuliert werden.

Dabei wird zunächst einer aufgabenbezogene Zielsetzung des Operateurs in Abhängigkeit von einer Aufgabe des Operateurs in Bezug auf die zu assistierende Situation mittels eines Zielsetzungsmoduls bestimmt. Eine solche aufgabenbezogene Zielsetzung ist insbesondere eine strategische Zielsetzung, welche das grundlegende Ziel des Operateurs bezüglich der Aufgabe des Operateurs definiert. Eine solche aufgabenbezogene Zielsetzung kann dabei auch vorgegeben bzw. elektronisch bereitgestellt werden, was ebenfalls unter dem Begriff "Bestimmen" im Sinne der vorliegenden Erfindung zu verstehen ist.

Sollen nun von einem Operateur gesprochene Sprachanweisungen elektronisch erkannt werden, d. h. beispielsweise in Textform transkribiert werden oder durch Annotationen ergänzt werden, so wird hierfür zunächst mindestens eine Handlungsabsicht des Operateurs in Bezug auf die zu assistierende Situation in Abhängigkeit von der zuvor bestimmten aufgabenbezogenen Zielsetzung und einem aktuellen und/oder prognostizierten Zustand der zu assistierenden Situation mittels eines Absichtsmoduls ermittelt. Der aktuelle Zustand der zu assistierenden Situation wird dabei durch eine Vielzahl von Werten von Parametern definiert, die die zu assistierende Situation beschreibenden. Ein prognostizierter Zustand der zu assistierenden Situation beschreibt dabei einen Zustand der zu assistierenden Situation zu einem zukünftigen Zeitpunkt, der ausgehend von dem aktuellen Zustand der zu assistierenden Situation zu diesem zukünftigen Zeitpunkt extrapoliert wurde.

Eine solche (prognostizierte, angenommene bzw. geschätzte) Handlungsabsicht des Operateurs stellt dabei eine Folge von Handlungen dar, die der Operateur ausgehend von dem aktuellen und/oder prognostizierten Zustand der zu assistierenden Situation durchführen würde bzw. könnte, um seine aufgabenbezogene Zielsetzung zu erreichen.

Anschließend werden für jede ermittelte Handlungsabsicht einer oder mehrerer sprachbezogener Handlungselemente ermittelt, mit denen die zu assistierende Situation mittels Sprachanweisungen unterstützt, gelenkt und/oder geführt werden soll. Solche sprachbezogenen Handlungselemente können sich dabei auf einzelne Handlungen der Handlungsabsicht beziehen und können somit einzelne Handlungen darstellen. Die einzelnen sprachbezogenen Handlungselemente ergeben sich dabei aus der Handlungsabsicht des Operateurs, mit der der Operateur mittels Sprachanweisungen auf die zu assistierende Situation einwirken will.

Basierend auf diesen so ermittelten sprachbezogenen Handlungselementen wird nun mindestens ein Sprachkontext erstellt, welcher der Spracherkennung der gesprochenen Sprachanweisungen zugrunde gelegt werden soll. Dabei ist es denkbar, dass ein Sprachkontext für alle sprachbezogenen Handlungselemente aller Handlungsabsichten ermittelt wird. Denkbar ist aber auch, dass bei mehr als eine Handlungsabsicht für jede Handlungsabsicht ein eigener Sprachkontext aus den sprachbezogenen Handlungselementen der jeweiligen Handlungsabsicht ermittelt werden.

Schließlich wird die gesprochene Sprachanweisungen des Operateurs in Abhängigkeit von dem mindestens einen erstellten Sprachkontext unter Anwendung eines Sprachlexikons bzw. Sprachraums mittels eines Erkennungsmoduls erkannt.

Mit der vorliegenden Erfindung wird es somit möglich, die Erkennungsrate gesprochener Sprachanweisungen deutlich zu erhöhen und die Fehlerrate zu verringern, und zwar auch dann, wenn es sich um einen sehr komplexen Sprachraum handelt, der ein großes Sprachlexikons aufweist. Durch die Reduzierung des Sprachkontextes auf wahrscheinliche bzw. mögliche Sprachhandlungen kann auch bei einem komplexen Sprachraum eine hohe qualitative Erkennungsrate realisiert werden. Der zu betrachtende Sprachkontext wird dabei auf ein theoretisches Minimum eingeschränkt, um bei gleich bleibenden Sprachlexikons bzw. Sprachraum die Erkennungsrate zu verbessern.

Gemäß einer Ausführungsform ist vorgesehen, dass eine situationsbezogene Zielsetzung in Abhängigkeit von einem Zustand der zu assistierenden Situation mittels des Zielsetzungsmoduls bestimmt und die mindestens eine Handlungsabsicht des Operateurs weiterhin in Abhängigkeit von der situationsbezogenen Zielsetzung ermittelt wird. Unter einer situationsbezogenen Zielsetzung kann dabei eine taktische Zielsetzung verstanden werden, die sich auf den Zustand der zu assistierenden Situation bezieht bzw. die dem Zustand der zu assistierenden Situation zugrunde liegt. Je nachdem, wie der aktuelle Zustand der zu assistierenden Situation ist, können sich ausgehend von der strategischen Zielsetzung (aufgabenbezogenen Zielsetzung) variierende taktische Zielsetzungen (situationsbezogene Zielsetzung) ergeben.

Gemäß einer Ausführungsform ist vorgesehen, dass der aktuelle und/oder prognostizierte Zustand der zu assistierenden Situation mittels einer Datenschnittstelle der Spracherkennungseinrichtung bereitgestellt wird. Die Daten über den aktuellen bzw. prognostizierten Zustand der zu assistierenden Situation kann dabei aus einem übergeordneten Managementsystem der Spracherkennungseinrichtung bereitgestellt werden. Der Zustand der zu assistierenden Situation wird dabei in der Regel mittels Sensoren und/oder manuellen Eingaben eines Operateurs erfasst.

Gemäß einer Ausführungsform ist vorgesehen, dass mindestens eine Handlungsabsicht des Operateurs in Bezug auf die zu assistierende Situation weiterhin in Abhängigkeit von einem Verhaltensmodell mittels des Absichtsmoduls ermittelt wird. Ein solches Verhaltensmodell kann dabei eine Wissensbasis darstellen, die bspw. aus deskriptiven Verhaltensmodellen, oder Modellierungen durch Bayesnetzwerke und verborgenen Markovmodellen (Hidden Markov Models), Expertensystemen oder anderen Verfahren und Algorithmen zur Verhaltensbeschreibung gebildet werden. Durch ein Verhaltensmodell des Operateurs können basierend auf der Kenntnis des aktuellen Zustandes der zu assistierenden Situation jenes Verhalten des Operateurs ermittelt werden, dass am wahrscheinlichsten für den aktuellen Fall ist.

Gemäß einer Ausführungsform ist vorgesehen, dass ein Verhaltensmodell mit einer gelernten Wissensdatenbank bereitgestellt wird, die ein gelerntes Verhalten des Operateurs basierend auf vorherigen Entscheidungen und/oder Handlungsabsichten aufweist. Eine solche gelernte Wissensdatenbank kann beispielsweise ein künstliches neuronales Netz sein bzw. eine Kl. Die gelernte Wissensdatenbank lernt dabei eine Korrelation zwischen einem oder mehreren oder allen Parametern, die den Zustand der zu assistierenden Situation beschreibenden, und den darauf getroffenen Entscheidungen des Operateurs. Hierdurch kann angenommen werden, dass bei gleichen oder hochgradig ähnlichen Zuständen der zu assistierenden Situation der Operateur auch ähnliche Entscheidungen trifft.

Gemäß einer Ausführungsform ist vorgesehen, dass eine Handlungsabsicht derart ermittelt wird, dass die Handlungsabsicht eine Handlungsabfolge von einzelnen Handlungen enthält, durch die der Zustand der zu assistierenden Situation beeinflusst und/oder verändert wird, wobei in Abhängigkeit von den einzelnen Handlungen der Handlungsabfolge die sprachbezogenen Handlungselemente ermittelt werden.

Gemäß einer Ausführungsform ist vorgesehen, dass bei einer Mehrzahl von verschiedenen ermittelten Handlungsabsichten die einzelnen Handlungsabsichten in Abhängigkeit von einer zuvor ermittelten Plausibilität der jeweiligen Handlungsabsicht gewichtet werden, wobei der Sprachkontext weiterhin in Abhängigkeit von der Gewichtung der ermittelten Handlungsabsichten erstellt wird. Durch das Gewichten der Handlungsabsichten hinsichtlich der Plausibilität kann erreicht werden, dass die Spracherkennung zunächst nur basierend auf denjenigen Handlungsabsichten erfolgt, welche die höchste Gewichtung hat. Erkennungsrate und Fehlerrate können dadurch optimiert werden.

Gemäß einer Ausführungsform ist vorgesehen, dass die von dem Operateur tatsächlich durchgeführte Handlungsabsicht mit den ermittelten Handlungsabsichten und deren Gewichtung verglichen wird, wobei in Abhängigkeit von dem Vergleich ein der Absichtserkennung des Absichtsmoduls zugrundeliegender Lernalgorithmus angepasst wird. Dabei ist es möglich, dass basierend auf dem Vergleich nicht nur ein der Absichtserkennung zugrundeliegender Lernalgorithmus angepasst wird, sondern auch eine gelernte Wissensdatenbank, die ein gelerntes Verhalten des Operateurs basierend auf vorherigen Entscheidungen und/oder Handlungsabsichten enthält. Dabei kann das Anpassen der Lernalgorithmen in Abhängigkeit der Gewichtungen erfolgen.

Es kann vorgesehen sein, dass bei einer Mehrzahl von erkannten möglichen Sprachanweisungen (Sprachanweisungsvarianten) mittels des Kontextmoduls die erkannten Sprachanweisungen basierend auf dem erstellten Sprachkontext bewertet werden, wobei in Abhängigkeit von der Bewertung der erkannten Sprachanweisungen eine Sprachanweisung ausgewählt und als erkannte Sprachanweisung ausgegeben wird. Dies ist besonders dann sinnvoll, wenn trotz Einschränkung des Sprachraumes und/oder des Sprachkontextes mehrere mögliche Erkennungsvarianten der gesprochenen Sprachanweisung in Betracht kommen, aus einer gesprochenen Sprachanweisung mehrere verschiedene Varianten der Sprachanweisung erkannt bzw. erkennbar sind. Basierend auf dem erstellten Sprachkontext kann dann eine Bewertung der Varianten der erkannten Sprachanweisung, die sich aufgrund verschiedener hypothetischer Inhalte voneinander unterscheiden, durchgeführt werden, wobei bspw. diejenige erkannte Sprachanweisungsvariante zur Ausgabe ausgewählt wird, welche die beste Bewertung erhalten hat.

Es kann des Weiteren sinnvoll sein, wenn mittels der Spracherkennungseinrichtung (bspw. mittels des Kontextmoduls oder des Erkennungsmoduls) erkannte Worte innerhalb der erkannten Sprachanweisung in Abhängigkeit von dem erstellten Sprachkontext verändert werden. Dadurch können Teile der erkannten Sprachanweisung nach der Erkennung verändert, angepasst bzw. korrigiert werden. Dies kann bspw. realisiert werden, indem die erkannten Worte und/oder Wortgruppen (bspw. in Abhängigkeit von dem Sprachkontext) bewertet werden und in Abhängigkeit von der erstellten Bewertung dann die Worte und/oder Wortgruppen verändert, ausgetauscht oder gar gestrichen werden.

Die Aufgabe wird im Übrigen auch mit der Spracherkennungseinrichtung zur Spracherkennung von Sprachanweisungen eines Operateurs gemäß Anspruch 9 gelöst, wobei die Spracherkennungseinrichtung zur Durchführung des vorstehend beschriebenen Verfahrens eingerichtet ist.

Die Aufgabe wird im Übrigen auch mit dem Computerprogramm mit Programmcodemitteln, eingerichtet zur Durchführung des vorstehend beschriebenen Verfahrens, gelöst, wenn das Computerprogramm auf einer Datenverarbeitungsanlage ausgeführt wird.

Die Erfindung wird anhand der beigefügten Figuren beispielhaft näher erläutert. Es zeigen:
- Figur 1: schematische Darstellung der erfindungsgemäßen Spracherkennungseinrichtung;
- Figur 2: schematische Darstellung eines Lotsenarbeitsplatzes mit der erfindungsgemäßen Spracherkennungseinrichtung.

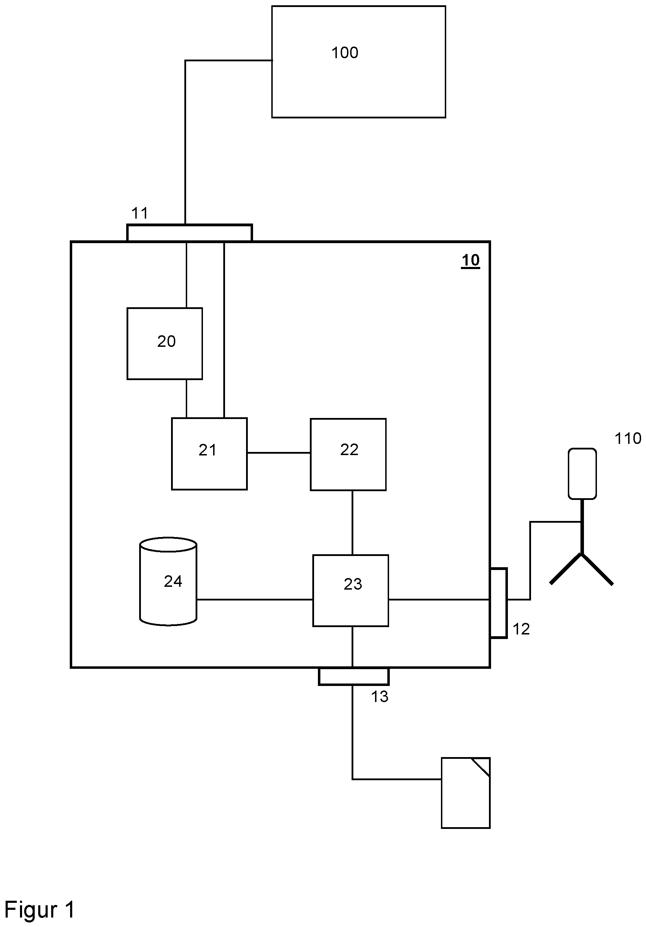

Figur 1 zeigt schematisch die Spracherkennungseinrichtung 10, die über eine erste Datenschnittstelle 11 mit einem übergeordneten Zentralsystem bzw. Managementsystem 100 verbunden ist. Das Zentralsystem bzw. Managementsystem 100 ermittelt dabei mithilfe von Sensoren und/oder basierend auf Eingaben eines Benutzers den aktuellen und/oder prognostizierten Zustand einer zu assistierenden Situation (hier nicht dargestellt) und stellt diesen so ermittelten Zustand der zu assistierenden Situation über die erste Datenschnittstelle 11 der Spracherkennungseinrichtung 10 zur Verfügung.

Die Spracherkennungseinrichtung 10 weist darüber hinaus eine zweite Datenschnittstelle 12 auf, die als Eingang für digitale Sprachinformationen dient, die über ein Mikrofon 110 durch einen Operateur eingesprochen wurden. Der Spracherkennungseinrichtung 10 werden somit über die zweite Datenschnittstelle 12 die Sprachanweisungen in digitaler Form bereitgestellt.

Schließlich weist die Spracherkennungseinrichtung 10 eine dritte Datenschnittstelle 13 auf, über die die erkannten Sprachanweisungen beispielsweise in textueller Form ausgegeben werden können. So kann an die dritte Datenschnittstelle 13 beispielsweise ein Datenspeicher angeschlossen werden, indem die erkannten Sprachanweisungen digital hinterlegt werden.

Die Spracherkennungseinrichtung 10 weist ein Zielsetzungsmodul 20, ein Absichtsmodul 21, ein Kontextmodul 22 sowie ein Erkennungsmodul 23 auf. Dabei ist nicht auszuschließen, dass die Spracherkennungseinrichtung 10 noch weitere Module hat, die hier jedoch nicht dargestellt sind.

Das Zielsetzungsmodul 20 steht mit der ersten Datenschnittstelle 11 signaltechnisch in Verbindung und erhält im Ausführungsbeispiel der Figur 1 den aktuellen und/oder prognostizierten Zustand der zu assistierenden Situation. Basierend auf der Aufgabe des Operateurs, die der Spracherkennungseinrichtung 10 zuvor bereitgestellt werden kann, und dem Zustand der zu assistierenden Situation bestimmt das Zielsetzungsmodul 20 dabei sowohl eine strategische Zielsetzung (aufgabenbezogene Zielsetzung) als auch eine taktische Zielsetzung (situationsbezogene Zielsetzung).

Sowohl die strategische Zielsetzung als auch die taktische Zielsetzung werden dann dem Absichtsmodul 21 übermittelt bzw. bereitgestellt. Das Absichtsmodul 21 erhält darüber hinaus ebenfalls Informationen über den aktuellen und/oder prognostizierten Zustand der zu assistierenden Situation entweder von dem Zielsetzungsmodul 20 als Weiterleitung oder durch eine direkte Anbindung an die erste Datenschnittstelle 11.

Das Absichtsmodul 21 ermittelt nun basierend auf den zur Verfügung gestellten Informationen (strategische und taktische Zielsetzung sowie Zustand der Situation) mindestens eine Handlungsabsicht des Operateurs, die jeweils eine Handlungsabfolge von einzelnen Handlungen enthalten, durch die der Zustand der zu assistierenden Situation beeinflusst und/oder verändert werden kann. Jeder Handlungsabsicht weist dabei eine oder mehrere einzelne Handlungen auf, die der Operateur mittels Sprachanweisungen durchführen würde, um die zu assistierende Situation basierend auf dem aktuellen Zustand in einen zukünftigen Zustand zu überführen, der der strategischen und taktischen Zielsetzung entspricht.

Basierend auf den einzelnen Handlungen der Handlungsabfolge jeder Handlungsabsicht wird dann ein sprachbezogenes Handlungselement ermittelt, mit dem der Operateur mittels Sprachanweisungen Einfluss auf die zu assistierende Situation nehmen kann.

Diese so ermittelten sprachbezogenen Handlungselemente werden dann an ein Kontextmodul 22 übermittelt, das einen minimalen Sprachkontext in Bezug auf die möglichen Handlungsabsichten und deren sprachbezogenen Handlungselemente ermittelt. Dieser Sprachkontext, der von dem Kontextmodul 22 ermittelt wurde, stellt dabei den exklusiven Kontext dar, der ausgehend von den Handlungsabfolgen, die zuvor als mögliche Handlungsabsichten ermittelt wurden, als plausibel verbleibt. Trotz eines großen Sprachraums und eines großen Sprachlexikons kann so der verbleibende Kontext auf ein Minimum reduziert werden, wodurch dann die Spracherkennung deutlich verbessert werden kann.

Der so ermittelte Sprachkontext wird dann an das Erkennungsmodul 23 übermittelt, welches als Eingang ebenfalls die gesprochenen Sprachanweisungen über die zweite Datenschnittstelle 12 bereitgestellt bekommt. Basierend auf einem über einen Datenspeicher 24 zur Verfügung gestellten Sprachraum, dem Sprachkontext vom Kontextmodul 22 sowie den gesprochenen Sprachanweisungen von der zweiten Datenschnittstelle 12 kann das Erkennungsmodul 23 mit einer sehr hohen Erkennungsrate die gesprochenen Sprachanweisungen erkennen und in textuelle Form überführen oder den gesprochenen Sprachanweisungen sprachliche Annotationen hinzufügen.

Die erkannten Sprachanweisungen werden dann über eine dritte Datenschnittstelle 13 ausgegeben und können dann einem weiteren Prozess weiterverarbeitet werden.

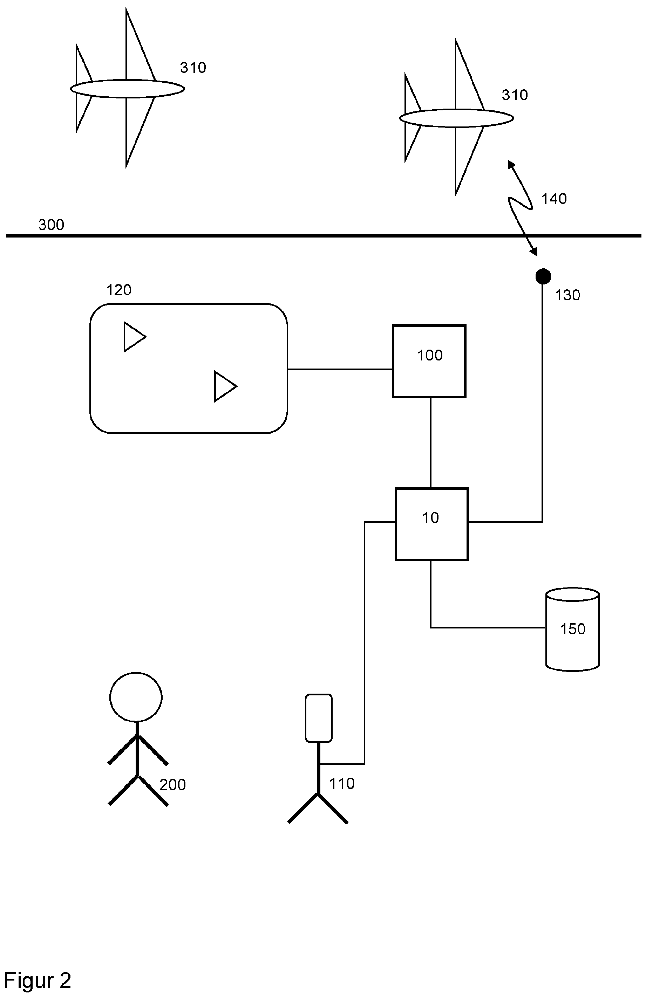

Figur 2 zeigt ein Anwendungsbeispiel einer derartigen Spracherkennungseinrichtung 10 am Prozess eines Fluglotsen 200 in Form eines Operateurs im Sinne der vorliegenden Erfindung. Der Operateur 200 muss dabei eine ihm zugeordnete zu assistierende Situation 300 in Form eines Luftraumes lenken und führen, sodass die in dem Luftraum 300 befindlichen Flugzeuge 310 bestmöglich auf den Flughafen gelenkt werden. Hierfür hat der Fluglotse 201 Lagedisplay 120, auf dem die zu assistierende Situation 300 elektronisch abgebildet ist. Das Lagedisplay 120 steht dabei mit dem Zentralsystem 100 in Verbindung.

Über ein Mikrofon 110 kann der Operateur 200 entsprechende Sprachanweisungen einsprechen, die dann an die Spracherkennungseinrichtung 10 weitergeleitet werden. Die Sprachanweisungen werden dabei nicht nur von der Spracherkennungseinrichtung 10 weiterverarbeitet, sondern auch an eine Antenneneinrichtung 130 weitergeleitet. Die Antenneneinrichtung 130 wandelt dann die empfangenen Sprachanweisungen in Funksignale 140 um, damit die Sprachanweisungen drahtlos an die Flugzeuge 310 übertragen werden können.

Aus der grundlegenden Aufgabe des Operateurs 200 ergibt sich beispielsweise die strategische Zielsetzung, die ihm anvertrauten Flugzeuge 310 optimal auf die Landebahn zu führen.

Aus dem aktuellen Zustand der zu assistierenden Situation 300 ergibt sich darüber hinaus ein Bild, dass der Luftraum bzw. Verkehrsraum 300 hoch frequentiert ist. Es befinden sich demnach eine sehr hohe Anzahl von Flugzeugen 310 in dem betreffenden Einsatzgebiet. Diese Erkenntnis wird von dem Zentralsystem 100 an die Spracherkennungseinrichtung 10 übermittelt, dass basierend darauf das Zielsetzungsmodul 20 der Spracherkennungseinrichtung 10 die taktische Zielsetzung formulieren kann, eine möglichst hohe Landerate für die Flugzeuge 310 zu erreichen. Daraus ergibt sich die taktische Zielsetzung für den Operateur 200, die Flugzeuge 310 so zu führen, dass eine möglichst hohe Landerate erzielt werden kann.

Basierend auf der strategischen Zielsetzung des Operateurs 200, nämlich eine optimale Landereihenfolge zu erreichen, sowie der taktischen Zielsetzung, eine möglichst hohe Landerate zu erzielen, können unter Kenntnis des Zustandes der zu assistierenden Situation 300 mehrere Handlungsabsichten ermittelt werden, um die so formulierten Zielsetzungen zu erreichen. Diese Handlungsabsichten werden unter Kenntnis der Informationen der einzelnen Flugzeuge 310 (beispielsweise Geschwindigkeit, Heading, Gewichtsklasse, Position, etc.) bestimmt und geben eine Handlungsabfolge an, mit der der Operateur 200 die Flugzeuge vor dem Hintergrund der formulierten Zielsetzungen zur Landung bringt. Jeder Handlungsabsicht weist dabei ein oder mehrere einzelne Handlungen auf, die sich in Sprachanweisungen an das jeweilige Flugzeug manifestieren, um die Flugzeuge 310 in einer bestimmten Reihenfolge zur Landung zu bringen.

Aus diesen einzelnen Handlungen bzw. Handlungselementen der einzelnen Handlungsabsichten lässt sich dann ein Sprachkontext ermitteln, der als minimaler Kontext vor dem Hintergrund der Gesamtsituation verbleibt.

Nach dem die Sprachanweisungen von der Spracherkennungseinrichtung 10 erkannt wurden, werden die erkannten Sprachanweisungen in einem Datenspeicher 150 hinterlegt.

Mit der vorliegenden Erfindung wird es somit möglich, durch Reduzierung des Kontextes auf einen minimalen Kontext in Bezug auf die zu assistierende Situation die Erkennungsrate zu erhöhen und die Fehlerrate zu minimieren, ohne dabei den Sprachraum bzw. das Lexikon einschränken zu müssen.

### Bezugszeichenliste

- 10: Spracherkennungseinrichtung
- 11: erste Datenschnittstelle
- 12: zweite Datenschnittstelle
- 13: dritte Datenschnittstelle
- 20: Zielsetzungsmodul
- 21: Absichtsmodul
- 22: Kontextmodul
- 23: Erkennungsmodul
- 24: Datenspeicher für den Sprachraum
- 100: Zentralsystem
- 110: Mikrofon
- 120: Lagedisplay
- 130: Antenneneinrichtung
- 140: Funksignale
- 200: Operateur
- 300: zu assistierende Situation
- 310: Flugzeuge

## Patentansprüche

1. Verfahren zur Spracherkennung von Sprachanweisungen eines Operateurs (200), der eine ihm zugeordnete zu assistierende Situation (300) mittels Sprachanweisungen unterstützt und/oder lenkt, mittels einer Spracherkennungseinrichtung (10), wobei das Verfahren die folgenden Schritte umfasst:
- Bestimmen einer aufgabenbezogenen Zielsetzung, die als strategische Zielsetzung ein grundlegendes Ziel des Operateurs bezüglich einer Aufgabe des Operateurs definiert, in Abhängigkeit von der Aufgabe des Operateurs (200) in Bezug auf die zu assistierende Situation (300) mittels eines Zielsetzungsmoduls (20) der Spracherkennungseinrichtung (10);
- Ermitteln mindestens einer Handlungsabsicht des Operateurs (200) in Bezug auf die zu assistierende Situation (300) in Abhängigkeit von der zuvor bestimmten aufgabenbezogenen Zielsetzung und einem aktuellen und/oder prognostizierten Zustand der zu assistierenden Situation (300) mittels eines Absichtsmoduls (21) der Spracherkennungseinrichtung (10);
- für jede ermittelte Handlungsabsicht, Ermitteln einer oder mehrerer sprachbezogener Handlungselemente, mit denen die zu assistierende Situation (300) mittels Sprachanweisungen unterstützt und/oder gelenkt werden soll,
- Erstellen mindestens eines Sprachkontexts in Abhängigkeit von dem oder den ermittelten sprachbezogenen Handlungselementen mittels eines Kontextmoduls (22) der Spracherkennungseinrichtung (10); und
- Erkennen einer gesprochenen Sprachanweisung des Operateurs (200) in Abhängigkeit von dem mindestens einen erstellten Sprachkontext unter Anwendung eines Sprachlexikons mittels eines Erkennungsmoduls (23) der Spracherkennungseinrichtung (10).

2. Verfahren nach Anspruch 1, **dadurch gekennzeichnet, dass** eine situationsbezogene Zielsetzung in Abhängigkeit von einem Zustand der zu assistierenden Situation (300) mittels des Zielsetzungsmoduls (20) bestimmt und die mindestens eine Handlungsabsicht des Operateurs (200) weiterhin in Abhängigkeit von der situationsbezogenen Zielsetzung ermittelt wird.

3. Verfahren nach Anspruch 1 oder 2, **dadurch gekennzeichnet, dass** der aktuelle und/oder prognostizierte Zustand der zu assistierenden Situation (300) mittels einer Datenschnittstelle (11, 12, 13) der Spracherkennungseinrichtung (10) bereitgestellt wird.

4. Verfahren nach einem der vorhergehenden Ansprüche, **dadurch gekennzeichnet, dass** mindestens eine Handlungsabsicht des Operateurs (200) in Bezug auf die zu assistierende Situation (300) weiterhin in Abhängigkeit von einem Verhaltensmodell mittels des Absichtsmoduls (21) ermittelt wird.

5. Verfahren nach Anspruch 4, **dadurch gekennzeichnet, dass** ein Verhaltensmodell mit einer gelernten Wissensdatenbank bereitgestellt wird, die ein gelerntes Verhalten des Operateurs (200) basierend auf vorherigen Entscheidungen und/oder Handlungsabsichten aufweist.

6. Verfahren nach einem der vorhergehenden Ansprüche, **dadurch gekennzeichnet, dass** eine Handlungsabsicht derart ermittelt wird, dass die Handlungsabsicht eine Handlungsabfolge von einzelnen Handlungen enthält, durch die der Zustand der zu assistierenden Situation (300) beeinflusst und/oder verändert wird, wobei in Abhängigkeit von den einzelnen Handlungen der Handlungsabfolge die sprachbezogenen Handlungselemente ermittelt werden.

7. Verfahren nach einem der vorhergehenden Ansprüche, **dadurch gekennzeichnet, dass** bei einer Mehrzahl von verschiedenen ermittelten Handlungsabsichten die einzelnen Handlungsabsichten in Abhängigkeit von einer zuvor ermittelten Plausibilität der jeweiligen Handlungsabsicht gewichtet werden, wobei der Sprachkontext weiterhin in Abhängigkeit von der Gewichtung der ermittelten Handlungsabsichten erstellt wird.

8. Verfahren nach Anspruch 7, **dadurch gekennzeichnet, dass** die von dem Operateur (200) tatsächlich durchgeführte Handlungsabsicht mit den ermittelten Handlungsabsichten und deren Gewichtung verglichen wird, wobei in Abhängigkeit von dem Vergleich ein der Absichtserkennung des Absichtsmoduls (21) zugrundeliegender Lernalgorithmus angepasst wird.

9. Spracherkennungseinrichtung (10) zur Spracherkennung von Sprachanweisungen eines Operateurs (200), der eine ihm zugeordnete zu assistierende Situation (300) mittels Sprachanweisungen unterstützt oder lenkt, wobei die Spracherkennungseinrichtung (10) ein Zielsetzungsmodul (20), ein Absichtsmodul (21), ein Kontextmodul (22) und ein Erkennungsmodul (23) hat und zur Durchführung des Verfahrens nach einem der Ansprüche 1 bis 8 eingerichtet ist.

10. Computerprogramm mit Programmcodemitteln, eingerichtet zur Durchführung des Verfahrens nach einem der Ansprüche 1 bis 8, wenn das Computerprogramm auf einer Datenverarbeitungsanlage ausgeführt wird.

## Claims

1. Method for speech recognition of voice instructions of an operator (200) who supports and/or directs a situation (300) to be assisted assigned to him by means of voice instructions, by means of a speech recognition device (10), the method comprising the following steps:
- Determining a task-related objective, which defines as a strategic objective a basic objective of the operator with respect to a task of the operator, as a function of the task of the operator (200) with respect to the situation (300) to be assisted, by means of an objective-setting module (20) of the speech recognition device (10);
- Determining at least one action intention of the operator (200) in relation to the situation (300) to be assisted as a function of the previously determined task-related objective and a current and/or predicted state of the situation (300) to be assisted by means of an intention module (21) of the speech recognition device (10);
- for each determined action intention, determining one or more language-related action elements with which the situation to be assisted (300) is to be supported and/or directed by means of voice instructions,
- creating at least one speech context as a function of the determined speech-related action element or elements by means of a context module (22) of the speech recognition device (10); and
- Recognizing a spoken language instruction of the operator (200) in dependence on the at least one created language context using a language lexicon by means of a recognition module (23) of the speech recognition device (10).

2. Method according to claim 1, **characterized in that** a situation-related objective is determined as a function of a state of the situation (300) to be assisted by means of the objective-setting module (20) and the at least one action intention of the operator (200) is further determined as a function of the situation-related objective.

3. Method according to claim 1 or 2, **characterized in that** the current and/or predicted state of the situation (300) to be assisted is provided by means of a data interface (11, 12, 13) of the speech recognition device (10).

4. Method according to one of the preceding claims, **characterized in that** at least one action intention of the operator (200) with respect to the situation (300) to be assisted is further determined as a function of a behavior model by means of the intention module (21).

5. The method according to claim 4, **characterized in that** a behavior model is provided with a learned knowledge database comprising a learned behavior of the operator (200) based on previous decisions and/or action intentions.

6. Method according to one of the preceding claims, **characterized in that** an action intention is determined in such a way that the action intention contains a sequence of individual actions by means of which the state of the situation (300) to be assisted is influenced and/or changed, the language-related action elements being determined as a function of the individual actions of the sequence of actions.

7. Method according to one of the preceding claims, **characterized in that**, in the case of a plurality of different determined action intentions, the individual action intention are weighted as a function of a previously determined plausibility of the respective action intention, the speech context furthermore being created as a function of the weighting of the determined action intention.

8. Method according to claim 7, **characterized in that** the action intention actually carried out by the operator (200) is compared with the determined action intentions and their weighting, a learning algorithm underlying the intention recognition of the intention module (21) being adapted as a function of the comparison.

9. Speech recognition device (10) for speech recognition of voice instructions of an operator (200) who supports or directs a situation (300) assigned to him to be assisted by means of voice instructions, wherein the speech recognition device (10) has a objective-setting module (20), an intention module (21), a context module (22) and a recognition module (23) and is set up to carry out the method according to one of claims 1 to 8.

10. A computer program comprising program code means adapted to perform the method according to any one of claims 1 to 8 when the computer program is executed on a data processing system.

## Revendications

1. Procédé de reconnaissance vocale d'instructions vocales d'un opérateur (200) qui assiste et/ou gère une situation à assister (300) qui lui est attribuée au moyen d'instructions vocales, au moyen d'un dispositif de reconnaissance vocale (10), le procédé comprenant les étapes suivantes consistant à :
- définir un objectif lié à la tâche, qui définit en tant qu'objectif stratégique un objectif fondamental de l'opérateur concernant une tâche de l'opérateur, en fonction de la tâche de l'opérateur (200) par rapport à la situation à assister (300), au moyen d'un module de définition d'objectif (20) du dispositif de reconnaissance vocale (10) ;
- déterminer au moins une intention d'action de l'opérateur (200) par rapport à la situation à assister (300) en fonction de l'objectif lié à la tâche, défini auparavant, et d'un état actuel et/ou pronostiqué de la situation à assister (300) au moyen d'un module de détermination d'intention (21) du dispositif de reconnaissance vocale (10) ;
- pour chaque intention d'action déterminée, déterminer un ou plusieurs éléments d'action liés à la parole, avec lesquels la situation à assister (300) doit être assistée et/ou gérée au moyen d'instructions vocales ;
- créer au moins un contexte vocal en fonction du ou des éléments d'action déterminés liés à la parole au moyen d'un module de création de contexte (22) du dispositif de reconnaissance vocale (10) ; et
- reconnaître une instruction vocale parlée de l'opérateur (200) en fonction dudit au moins un contexte vocal créé en utilisant un lexique vocal au moyen d'un module de reconnaissance (23) du dispositif de reconnaissance vocale (10).

2. Procédé selon la revendication 1,
**caractérisé en ce qu'**un objectif lié à la situation est défini en fonction d'un état de la situation à assister (300) au moyen du module de définition d'objectif (20), et ladite au moins une intention d'action de l'opérateur (200) est en outre déterminée en fonction de l'objectif lié à la situation.

3. Procédé selon la revendication 1 ou 2,
**caractérisé en ce que** l'état actuel et/ou pronostiqué de la situation à assister (300) est fourni au moyen d'une interface de données (11, 12, 13) du dispositif de reconnaissance vocale (10).

4. Procédé selon l'une des revendications précédentes,
**caractérisé en ce qu'**au moins une intention d'action de l'opérateur (200) par rapport à la situation à assister (300) est en outre déterminée en fonction d'un modèle de comportement au moyen du module de détermination d'intention (21).

5. Procédé selon la revendication 4,
**caractérisé en ce qu'**un modèle de comportement est fourni avec une base de données de connaissances apprises incluant un comportement appris de l'opérateur (200) basé sur des décisions et/ou des intentions d'action antérieures.

6. Procédé selon l'une des revendications précédentes,
**caractérisé en ce qu'**une intention d'action est déterminée de telle sorte que l'intention d'action inclut une séquence d'actions individuelles par lesquelles l'état de la situation à assister (300) est influencé et/ou modifié, les éléments d'action liés à la parole étant déterminés en fonction des actions individuelles de la séquence d'actions.

7. Procédé selon l'une des revendications précédentes,
**caractérisé en ce que**, dans le cas d'une pluralité d'intentions d'action différentes déterminées, les intentions d'action individuelles sont pondérées en fonction d'une plausibilité préalablement déterminée de l'intention d'action respective, le contexte vocal étant en outre créé en fonction de la pondération des intentions d'action déterminées.

8. Procédé selon la revendication 7,
**caractérisé en ce que** l'intention d'action effectivement réalisée par l'opérateur (200) est comparée aux intentions d'action déterminées et à leur pondération, un algorithme d'apprentissage basé sur la reconnaissance d'intention du module de détermination d'intention (21) étant adapté en fonction de la comparaison.

9. Dispositif de reconnaissance vocale (10) pour la reconnaissance vocale d'instructions vocales d'un opérateur (200) qui assiste ou gère une situation à assister (300) qui lui est attribuée au moyen d'instructions vocales, le dispositif de reconnaissance vocale (10) ayant un module de définition d'objectif (20), un module de détermination d'intention (21), un module de création de contexte (22) et un module de reconnaissance (23), et étant agencé pour mettre en œuvre le procédé selon l'une des revendications 1 à 8.

10. Programme informatique comportant des moyens de code de programme, agencé pour mettre en œuvre le procédé selon l'une des revendications 1 à 8, lorsque le programme informatique est exécuté sur un système de traitement de données.
